# EUROPÄISCHE PATENTSCHRIFT

(11) **EP 3 278 642 B1**
(45) Veröffentlichungstag und Bekanntmachung des Hinweises auf die Patenterteilung: **11.11.2020**
(21) Anmeldenummer: 17183336.1
(22) Anmeldetag: 26.07.2017
(51) Int. Cl.: A01B 23/02, A01B 33/10

(54) **BODENBEARBEITUNGSZINKEN FÜR EIN BODENBEARBEITUNGSGERÄT UND BODENBEARBEITUNGSGERÄT**
SOIL CULTIVATION TINES FOR A SOIL-WORKING DEVICE AND SOIL-WORKING DEVICE
DENTS DE TRAITEMENT DU SOL POUR UN APPAREIL DE TRAITEMENT DU SOL ET APPAREIL DE TRAITEMENT DU SOL

(30) Priorität: 04.08.2016 DE 102016114447
(43) Veröffentlichungstag der Anmeldung: 07.02.2018
(73) Patentinhaber: Industriehof Scherenbostel Heinrich Rodenbostel GmbH, 30900 Wedemark (DE)
(72) Erfinder: Brockmöller, Fritz, 29683 Bad Fallingbostel (DE)
(74) Vertreter: Gramm, Lins & Partner Patent- und Rechtsanwälte PartGmbB

(56) Entgegenhaltungen:
- EP-A1- 1 346 621
- DE-A1- 2 360 004
- US-A- 783 296
- US-A- 3 092 052

## Beschreibung

Die Erfindung betrifft einen Bodenbearbeitungszinken für ein Bodenbearbeitungsgerät, insbesondere eine Kreiselegge oder einen Striegel, wobei der Bodenbearbeitungszinken einen Grundkörper mit einer Hauptbearbeitungsfläche, die während einer Bodenbearbeitung in einer Bearbeitungsrichtung voran durch einen Boden führbar ist, und ein längliches Verstärkungselement, das in einer Längsrichtung entlang der Hauptbearbeitungsfläche angeordnet ist und aus einem verschleißärmeren Material als der Grundkörper besteht, aufweist, wobei das Verstärkungselement zumindest teilweise in den Grundkörper eingebettet ist und die Hauptbearbeitungsfläche wenigstens einen freiliegenden Abschnitt aufweist, der benachbart zu dem Verstärkungselement in Längsrichtung verläuft. Gemäß einem zweiten Aspekt betrifft die Erfindung ein Bodenbearbeitungsgerät, insbesondere eine Kreiselegge, mit zumindest einem Bodenbearbeitungszinken.

Bodenbearbeitungszinken von Bodenbearbeitungsgeräten, wie beispielsweise Eggen, Grubber oder Striegel, sind bei der Bearbeitung von Feldböden hohen Beanspruchungen ausgesetzt. Beim Führen eines Bodenbearbeitungszinkens durch einen Boden wird der Bodenbearbeitungszinken durch die natürlich vorkommenden Bodenpartikel, wie beispielsweise Sandkörner, zunehmend verschlissen. Ferner trifft der Bodenbearbeitungszinken regelmäßig auf im Feldboden befindliche Steine unterschiedlicher Größe und wird dadurch stoßweise stark beansprucht. Die höchsten Beanspruchungen treten dabei an der Hauptbearbeitungsfläche auf, die während einer Bodenbearbeitung voran durch den Boden geführt wird. An der Hauptbearbeitungsfläche tritt folglich der größte Verschleiß sowie auch die größte stoßartige Belastung auf, so dass der Bodenbearbeitungszinken insbesondere an der Hauptbearbeitungsfläche verschleißt.

Um die Standzeiten von Bodenbearbeitungszinken zu erhöhen, werden seit längerer Zeit längliche Verstärkungen an der Hauptbearbeitungsfläche angeordnet, die aus einem im Vergleich zu dem Grundkörper des Bodenbearbeitungszinkens verschleißärmeren Material ausgebildet sind. Es ist weiterhin bekannt, derartige Verstärkungen in einer Längsrichtung entlang der Hauptbearbeitungsfläche anzuordnen, also in einer Richtung, die zu dem zu bearbeitenden Boden hinführt. Bei der Verwendung von Verstärkungen ist ferner zu beachten, dass insbesondere die Breite des Bodenbearbeitungszinkens nicht unnötig vergrößert wird, da dies einen Bodenbearbeitungswiderstand beim Führen eines Bodenbearbeitungszinkens durch den Boden erhöht. Dadurch wird die Effizienz bei der Bodenbearbeitung reduziert, da eine erhöhte Antriebsleistung einer mit dem Bodenbearbeitungsgerät verbundenen Zugmaschine, wie beispielsweise ein Traktor, benötigt wird. Dies führt zu einem erhöhten Treibstoffverbrauch der Zugmaschine.

Die US 1,965,950 A betrifft einen Bodenbearbeitungszinken, der eine Hauptbearbeitungsfläche aufweist, in der über die vollständige Breite der Hauptbearbeitungsfläche eine Nut eingearbeitet ist. In der Nut sind mehrere Lagen aus einem verschleißarmen und einem stoßdämpfenden Material abwechselnd angeordnet und stoffschlüssig miteinander verbunden. Die oberste in der Nut angeordnete Lage, die in der Höhe bündig mit den Nutseitenwänden abschließt, bildet bei diesem Bodenbearbeitungszinken die Hauptbearbeitungsfläche und besteht aus Metall oder einer Metalllegierung, bevorzugt aus dem Material des Grundkörpers. Diese Hauptbearbeitungsfläche ist in ihrer Breite vollständig von einer äußeren Lage aus einem verschleißarmen Material überdeckt, die das Verstärkungselement bildet. Die äußere Lage überdeckt weiterhin zwei an die Hauptbearbeitungsfläche anschließende und geneigte erste Seitenflächen vollständig. Die sich an die ersten Seitenflächen anschließenden und in einem rechten Winkel zu der Hauptbearbeitungsfläche orientierten zweiten Seitenflächen werden zumindest teilweise von der äußeren Lage überdeckt.

Die EP 1 346 621 A1 betrifft einen Zinken für ein Bodenbearbeitungsgerät, bei dem die an einem Grundkörper befindliche Hauptbearbeitungsfläche vollständig von einem länglichen Verstärkungselement überdeckt wird. Das Verstärkungselement ist so dimensioniert, dass auch zwei seitlich von der Hauptbearbeitungsfläche keilförmig zu der Hauptbearbeitungsfläche hin verlaufende Seitenflächen zumindest teilweise überdeckt werden.

Die DE 10 2011 051 751 A1 betrifft einen Kreiseleggenzinken, bei dem eine Hauptbearbeitungsfläche vollständig von einem länglichen Verstärkungselement überdeckt wird. Das Verstärkungselement überdeckt weiterhin eine von der Hauptbearbeitungsfläche schräg im spitzen Winkel abstehende Seitenfläche.

Die DE 23 60 004 A1 betrifft einen Zinkenkreisel mit Zinken-Arbeitsteilen für eine Kreiselegge. In den Zinken-Arbeitsteilen ist eine Ausnehmung in Richtung der Arbeitsfläche ausgebildet, in die Zinkenstücke aus verschleißfestem Werkstoff eingesetzt werden. Die Zinkenstücke übernehmen die Funktion der Zinken-Arbeitsteile, weshalb die Zinken-Arbeitsteile aus einem billigen und leicht zu bearbeitenden Werkstoff hergestellt werden können, um diese nach ihrem Verschleiß kostengünstig zu ersetzen.

Die US 3 092 052 A betrifft eine Zinkenegge zum Abgeben von Flüssigammoniak in den Boden. Ein Zinkenkörper der Zinkenegge weist an einer Frontfläche einen Frontstab auf, wobei der Frontstab den Querschnitt eines gleichschenkligen Dreiecks oder eines Vierecks hat. An einer Rückseitenfläche des Zinkenkörpers ist ein Rohr zum Durchleiten des Flüssigammoniaks angeordnet.

Die US 783 296 A betrifft eine Schneide für landwirtschaftliche Anwendungen. Zur Verbesserung der Verschleißfestigkeit wird ein relativ weicher Kern der Schneide mit einer Hülse oder einer Manschette aus einem gehärteten Metall umgeben. Die Hülse oder Manschette umgibt die Vorderseite und Seiten des Kerns vollständig und eine Rückseite des Kerns in einem Abschnitt.

Nachteilig an den bekannten Bodenbearbeitungszinken ist, dass das Verstärkungselement die Hauptbearbeitungsfläche vollständig und zusätzlich wenigstens eine der an die Hauptbearbeitungsfläche anschließenden Seitenflächen zumindest teilweise überdeckt. Dadurch ist das Verstärkungselement entsprechend groß ausgebildet, was die Herstellungskosten und Ersatzteilkosten durch den größeren Materialbedarf an dem verschleißärmeren Material erhöht. Ferner wird aufgrund der zumindest teilweisen Überdeckung der Seitenflächen der Bodenbearbeitungszinken insgesamt verbreitert, wodurch die Effizienz bei der Bodenbearbeitung reduziert wird.

Aufgabe der vorliegenden Erfindung ist es daher, einen Bodenbearbeitungszinken für ein Bodenbearbeitungsgerät bereitzustellen, der die Nachteile aus dem Stand der Technik vermindert.

Die Erfindung löst dieses Problem durch einen Bodenbearbeitungszinken mit den Merkmalen des Hauptanspruchs und ein Bodenbearbeitungsgerät mit zumindest einem Bodenbearbeitungszinken gemäß dem nebengeordneten Anspruch. Weitere, vorteilhafte Ausführungsformen sind in den Unteransprüchen, der Beschreibung und den Figuren offenbart.

Der Bodenbearbeitungszinken für ein Bodenbearbeitungsgerät, insbesondere eine Kreiselegge oder einen Striegel, wobei der Bodenbearbeitungszinken einen Grundkörper mit einer Hauptbearbeitungsfläche, die während einer Bodenbearbeitung in einer Bearbeitungsrichtung voran durch einen Boden führbar ist, und ein längliches Verstärkungselement, das in einer Längsrichtung entlang der Hauptbearbeitungsfläche angeordnet ist und aus einem verschleißärmeren Material als der Grundkörper besteht, aufweist, wobei das Verstärkungselement zumindest teilweise in den Grundkörper eingebettet ist und die Hauptbearbeitungsfläche wenigstens einen freiliegenden Abschnitt aufweist, der benachbart zu dem Verstärkungselement in Längsrichtung verläuft, sieht vor, das der Grundkörper einen entlang der Hauptbearbeitungsfläche in Längsrichtung orientierten Schlitz zum Aufnehmen des Verstärkungselements aufweist. Durch das zumindest teilweise Einbetten des Verstärkungselements können Steinschläge durch das Verstärkungselement zu dem Grundkörper durchgeleitet werden und so die lokalen Beanspruchungen an dem Verstärkungselement verringert werden. Dies reduziert ein Bruchrisiko des Bodenbearbeitungszinkens deutlich. Weiterhin ist vorteilhaft, dass das Verstärkungselement schmaler als die Hauptbearbeitungsfläche und damit schmaler als der Bodenbearbeitungszinken insgesamt ist. Die Effizienz gegenüber einem unverstärkten Bodenbearbeitungszinken wird bei der Bodenbearbeitung somit nicht verringert. Ferner wird vorteilhafterweise eine Selbstschärfung des Bodenbearbeitungszinkens bei der Bodenbearbeitung erreicht. Das Verstärkungselement ist dazu vorteilhafterweise an einer Stelle des Bodenbearbeitungszinkens angeordnet, an der die größten Beanspruchungen auftreten, also in einem Bereich der bei der Bodenbearbeitung voran durch den Boden geführt wird. Um diesen Beanspruchungen standzuhalten, ist das Verstärkungselement aus einem im Vergleich zu dem Grundkörper verschleißärmeren Material ausgebildet. Demgegenüber ist der zumindest eine, freiliegende Abschnitt aus dem Material des Grundkörpers ausgebildet und verschleißt folglich schneller. Während der Bodenbearbeitung wird der Bodenbearbeitungszinken dadurch zwar verschlissen, aber gleichzeitig durch die erfindungsgemäße Anordnung des Verstärkungselements und des wenigstens einen freiliegenden Abschnitts selbsttätig bei der Bodenbearbeitung geschärft. Vorteilhafterweise kann dieser Effekt bereits durch einen vergleichsweise geringen Materialaufwand für das längliche und schmale Verstärkungselement erreicht werden. Eine wesentliche Erkenntnis bei der Erfindung liegt insbesondere darin, dass zum Erhöhen der Standzeit des Bodenbearbeitungszinkens von einer dicken und großflächigen Lage als Verstärkungselement und dem wenigstens teilweisen Ummanteln des Bodenbearbeitungszinkens abgewichen werden kann, wobei der auftretende Verschleiß bei der Bodenbearbeitung durch die erfindungsgemäße Anordnung des Verstärkungselements und des zumindest einen freiliegenden Abschnitts ausgenutzt wird. Durch die Selbstschärfung des Bodenbearbeitungszinkens kann die Standzeit um ein Vielfaches erhöht werden.

Im Rahmen der vorliegenden Erfindung wird unter einer Hauptbearbeitungsfläche insbesondere die Fläche verstanden, die während einer Bodenbearbeitung in einer Bearbeitungsrichtung voran durch einen Boden geführt wird. Damit ist insbesondere die Fläche gemeint, die zuerst auf beispielsweise einen Stein trifft, der sich genau in Bearbeitungsrichtung befindet. Wenn der Bodenbearbeitungszinken beispielsweise eine keilförmige Form aufweist, bei dem zwei Seitenflächen spitz zusammenlaufen, so würde es sich bei einem üblicherweise abgerundeten Übergangsbereich zwischen den Seitenflächen um die Hauptbearbeitungsfläche im Sinne der Erfindung handeln. Bei diesem Sonderfall eines keilförmigen Bodenbearbeitungszinkens kann die Hauptbearbeitungsfläche auch vollständig durch das Verstärkungselement gebildet sein, das in den Grundkörper eingebettet ist. Die keilförmig verlaufenden Seitenflächen sind dann nicht von dem Verstärkungselement überdeckt und bilden zwei freiliegende Abschnitte, die im Sinne der Erfindung nicht von dem Verstärkungselement überdeckt sind.

Unter einer Bearbeitungsrichtung wird insbesondere die Richtung verstanden, in der die Hauptbearbeitungsfläche des Bodenbearbeitungszinkens voran durch den Boden geführt wird. Die Bearbeitungsrichtung kann während der Bodenbearbeitung konstant sein und mit einer Fahrtrichtung der Zugmaschine übereinstimmen, wie dies beispielsweise bei einem Grubber der Fall ist. Die Bearbeitungsrichtung kann aber auch variieren, wie dies beispielsweise bei einer Kreiselegge der Fall ist, bei der in der Regel jeweils eine Gruppe aus drei winklig voneinander beabstandeten Bearbeitungszinken rotierend angeordnet ist.

Unter einem freiliegenden Abschnitt wird insbesondere ein Abschnitt verstanden, der nicht von dem Verstärkungselement überdeckt ist. Dies soll jedoch nicht ausschließen, dass auch der freiliegende Abschnitt an dem Grundkörper von beispielsweise einer Verschleißschutzschicht überdeckt sein kann. Damit die Selbstschärfung des Bodenbearbeitungszinkens während der Bodenbearbeitung erfolgen kann, ist es jedoch notwendig, dass eine etwaige Überdeckungslage oder -schicht aus einem Material besteht ist, das gegenüber dem Material des Verstärkungselementes eine geringere Verschleißfestigkeit aufweist.

Bei einer vorteilhaften Weiterbildung der Erfindung weist die Hauptbearbeitungsfläche zwei freiliegende Abschnitte auf, wobei jeweils ein freiliegender Abschnitt auf einer Seite neben dem Verstärkungselement verläuft. Bevorzugt verläuft jeweils ein freiliegender Abschnitt auf einer Seite neben dem Verstärkungselement in Längsrichtung. Vorteilhafterweise ist das längliche Verstärkungselement mittig an der Hauptbearbeitungsfläche angeordnet, so dass die zwei freiliegenden Abschnitte symmetrisch zu einer durch das Verstärkungselement in Längsrichtung verlaufenden Symmetrieachse sind. Durch die symmetrische Anordnung wird vorteilhafterweise ein symmetrisches Abnutzen des Bodenbearbeitungszinkens bewirkt, wodurch eine symmetrische und gleichmäßige Selbstschärfung erfolgen kann. Alternativ oder zusätzlich kann jeweils ein freiliegender Abschnitt auf einer Seite neben dem Verstärkungselement in einer Richtung verlaufen, die bevorzugt orthogonal zu der Längsrichtung verläuft.

Der Grundkörper weist einen entlang der Hauptbearbeitungsfläche in Längsrichtung orientierten Schlitz zum Aufnehmen des Verstärkungselementes auf. Dadurch, dass das längliche Verstärkungselement in dem Schlitz untergebracht ist, kann ein seitlicher Halt durch seitliche Begrenzungswände des Schlitzes erreicht werden. Durch ein Einlegen des Verstärkungselements in den Schlitz ist das Verstärkungselement sicher eingebettet und vor Steinschlägen geschützt, die insbesondere schräg zu der Bearbeitungsrichtung auf die Hauptbearbeitungsfläche einwirken. Ein Abbrechen oder Abplatzen von Teilen des Verstärkungselements oder zusätzlich des Grundkörpers kann dadurch vermieden werden. Gemäß einer bevorzugten Ausführungsform kann der Schlitz auch in einer Unterseite des Grundkörpers eingearbeitet sein. Dabei kann das Verstärkungselement über die Unterseite und/oder die Hauptbearbeitungsfläche hinausstehen, um so der Abrasion bei der Bodenbearbeitung, insbesondere durch eine Kratzbewegung wie bei einem Striegel, entgegenzuwirken. Dadurch kann nicht nur eine Selbstschärfung der Hauptbearbeitungsfläche, sondern auch der Unterseite des Grundkörpers erfolgen.

Vorteilhafterweise sind der Schlitz und das Verstärkungselement so miteinander korrespondierend ausgebildet, dass ein Ausrücken des Verstärkungselements aus dem Schlitz in Bearbeitungsrichtung durch Formschluss gesperrt wird. Der Grundkörper ist dazu vorzugsweise auf einer Unterseite des Grundkörpers offen, so dass das Verstärkungselement über die Unterseite in den Schlitz eingeschoben werden kann. Bevorzugt ist eine Schlitzöffnung auf Höhe der Hauptbearbeitungsfläche schmaler ausgebildet als eine maximale Breite des Schlitzes. Weiter bevorzugt sind das Verstärkungselement und der Schlitz so ausgebildet und zueinander angeordnet, dass eine translatorische Bewegung nur entgegen einer Einschubbewegung möglich ist. Vorzugsweise weisen der Schlitz und das Verstärkungselement ein miteinander korrespondierendes Schwalbenschwanzprofil auf. Der Schlitz und das Verstärkungselement sind dazu im Querschnitt beispielsweise trapezförmig ausgestaltet. Das über den Schlitz eingeschobene Verstärkungselement muss nur noch gegen ein Herausrutschen entgegen der Einschubbewegung aus dem Schlitz gesichert werden, was beispielsweise durch ein Verriegelungselement erfolgen kann, das beispielsweise an der Unterseite des Grundkörpers angeordnet ist. Vorteilhaft an dieser Ausführungsform ist, dass eine Verlötung nicht vorgenommen werden muss. Für den Fall, dass ein Verstärkungselement während einer Bodenbearbeitung auf einem Feld verschlissen oder gebrochen ist, kann ein einfacher und schneller Austausch direkt vor Ort erfolgen, ohne dass zunächst eine Lötverbindung gelöst werden muss. Der Schlitz muss hierfür eine Formgebung aufweisen, die ein Ausweichen entgegen der Bearbeitungsrichtung und in Bearbeitungsrichtung verhindert und das Verstärkungselement muss eine korrespondierende Formgebung haben. Vorzugsweise weist der Schlitz dazu in der Querschnittmitte des Grundkörpers einen breiteren oder schmaleren Querschnitt als entlang seines sonstigen Verlaufes auf. Der abweichende, insbesondere schmalere oder breitere Querschnitt kann durch beliebige Formen erreicht werden, die in einen Schlitzverlauf integriert sind und die zur formschlüssigen Sperrung in und entgegen der Bearbeitungsrichtung geeignet sind. Beispielsweise kann eine Quader- oder Trapezform, eine Auswölbung oder Kombinationen aus diesen oder sonstigen Formen zur Schlitzveränderung verwendet werden. Die Formen können auch beliebig zu einer Längsrichtung des Schlitzes gedreht oder sonstig ausgestaltet sind. Das Verstärkungselement kann in Bearbeitungsrichtung und entgegen der Bearbeitungsrichtung über den Grundkörper hinausstehen, so dass der Bodenbearbeitungszinken in zwei Bearbeitungsrichtungen eingesetzt werden kann.

In einer bevorzugten Ausführungsform der Erfindung weist der Bodenbearbeitungszinken zumindest ein Verriegelungselement zum formschlüssigen Verriegeln des Verstärkungselements in dem Schlitz auf. Das Verriegelungselement kann dabei innerhalb des Schlitzes oder außerhalb des Schlitzes angeordnet sein. Das Verriegelungselement kann beispielsweise als Federnase, Federstift, Federzunge oder als Schraube ausgebildet sein. Alternativ oder zusätzlich kann in den Grundkörper zumindest ein Durchgang eingearbeitet sein, der durch eine Seitenwand des Schlitzes führt. In diesem Durchgang kann das Verriegelungselement eingesetzt und über eine Vorspanneinrichtung, wie beispielsweise eine über eine Schraube vorspannbare Feder, vorgespannt werden, so dass das Verstärkungselement klemmend gehalten wird. Alternativ oder zusätzlich kann wenigstens eine zu dem zumindest einen Verriegelungselement korrespondierende Ausnehmung in das Verstärkungselement eingearbeitet sein, in die das Verriegelungselement geführt wird, um das Verstärkungselement formschlüssig zu halten. Das Verriegelungselement ist vorteilhafterweise in Längsrichtung an einem Anfang und/oder einem Ende des Schlitzes angeordnet. Das Verriegelungselement kann beispielsweise als mit dem Grundkörper an der Unterseite verschraubbare Platte ausgebildet sein. Die Platte kann wenigstens ein Andrückelement, beispielsweise eine Federnase oder einen Federstift, aufweisen, das von der Unterseite teilweise in den Schlitz vordringt, um das Verstärkungselement von unten über die Unterseite in den Schlitz zu drücken und zu fixieren. Das Verriegelungselement kann auch so ausgestaltet sein, dass die entlang der Längsrichtung verlaufenden seitlichen Begrenzungsflächen des Schlitzes gegeneinander verspannt werden und dadurch das Verstärkungselement form- und kraftschlüssig gehalten wird. Dabei weist die mit der Unterseite verschraubbare Platte zumindest zwei seitliche Halteeinrichtungen wie Haltenasen oder Haltezungen auf, um ein seitliches Herausrutschen des Verstärkungselements aus dem Schlitz zu verhindern. Die seitlichen Halteeinrichtungen können in einer bevorzugten Ausführungsform durch einen jeweils breiter als der Schlitz ausgestalteten Kopf- und Fußabschnitt des Verstärkungselements gebildet werden, die ein seitliches Herausrutschen durch Formschluss sperren.

Vorzugsweise ist ein Kopfabschnitt des Verstärkungselements breiter als der Schlitz ausgebildet und steht alternativ oder zusätzlich aus der Hauptbearbeitungsfläche in Bearbeitungsrichtung heraus. Durch den breiteren Kopfabschnitt kann, optional auch in Verbindung mit dem Schwalbenschwanzprofil des Schlitzes und des Verstärkungselements, das Verstärkungselement insbesondere entgegen der Bearbeitungsrichtung in einer Bewegung gehemmt werden.

In einer nicht von der Erfindung erfassten Ausführungsform liegt eine der Hauptbearbeitungsfläche zugewandte Fläche des Kopfabschnittes an der Hauptbearbeitungsfläche an. Durch den Kontakt der der Hauptbearbeitungsfläche zugewandten Fläche mit der Hauptbearbeitungsfläche und den Kontakt des Verstärkungselementes mit einem Nutgrund steht eine größere Kontaktfläche zur Verfügung, wodurch die lokal auftretenden Beanspruchungen auf eine größere Fläche verteilt und dadurch reduziert werden. Folglich kann eine Materialdicke des Grundkörpers an den Stellen reduziert werden, an denen die Beanspruchungen verringert wurden. Dadurch kann auch das Gewicht des Bodenbearbeitungszinkens insgesamt reduziert werden. Ferner wird durch den breiteren Kopfabschnitt eine Lötstelle, die sonst unmittelbar an einer spitzen Nutenkante zwischen Verstärkungselement und Hauptbearbeitungsfläche liegen würde, von der Nutenkante weg zu einem flächigen Abschnitt der Hauptbearbeitungsfläche versetzt werden. Insbesondere beim Hochtemperaturlöten können an den spitzen Nutenkanten Temperaturmaxima entstehen, die Materialversprödungen mit einem erhöhten Bruchrisiko bewirken. Durch das Versetzen der Lötstelle kann das Risiko für lokale Materialversprödungen deutlich verringert werden. Entsprechendes gilt auch für die Ausführungsform mit Schlitz, die analog zu der Nutvariante Schlitzkanten an einem Übergang des Verstärkungselements zu dem Kopfabschnitt, jedoch keinen Nutgrund aufweist. Bevorzugt weist der Schlitz beispielweise in der Querschnittmitte des Grundkörpers einen anderen Querschnitt als entlang seines sonstigen Verlaufes auf. Der Grundkörper ist zu dem schmaleren oder breiteren Querschnitt des Schlitzes korrespondierend ausgebildet. Dadurch können die lokal auftretenden Beanspruchungen ebenfalls auf eine größere Fläche verteilt und dadurch reduziert werden.

Dadurch, dass der Kopfabschnitt des Verstärkungselements über die Hauptbearbeitungsfläche in Bearbeitungsrichtung heraussteht, wird sichergestellt, dass die hohen Beanspruchungen bei der Bodenbearbeitung zunächst an dem Verstärkungselement angreifen. Der aufgelockerte und abgetragene Boden trifft danach auf den freiliegenden Abschnitt und damit auf das weniger verschleißfeste Material des Grundkörpers. In Folge dessen erfolgt die bereits beschriebene Selbstschärfung des Verstärkungselements während der Bodenbearbeitung, wodurch vorteilhafterweise längere Standzeiten erreicht werden können. Für die Selbstschärfung ist es nicht zwingend notwendig, dass der Kopfabschnitt aus der Hauptbearbeitungsfläche heraussteht. Ein eben mit der Hauptbearbeitungsfläche abschließendes Verstärkungselement bewirkt, dass auftretende Beanspruchungen gleichermaßen von dem Verstärkungselement sowie dem freiliegenden Abschnitt aufgenommen werden. Da der freiliegende Abschnitt aus einem weniger verschleißfesten Material besteht, verschleißt dieser schneller als das Verstärkungselement, so dass das Verstärkungselement vorteilhafterweise angeschärft wird. Der zumindest eine freiliegende Abschnitt wird dadurch zunehmend angeschrägt.

Vorteilhafterweise weist das Verstärkungselement ein Hartmetall auf und besteht in einer bevorzugten Ausführungsform vollständig aus einem Hartmetall. Das Hartmetall ist so gewählt, dass es den zu erwartenden hohen Beanspruchungen bei der Bodenbearbeitung standhält. Der Grundkörper besteht demgegenüber aus einem weniger verschleißfesten Material, beispielsweise aus Stahl.

Bei einer weiteren vorteilhaften Ausgestaltung der Erfindung verläuft das Verstärkungselement bis zu einer zu dem Boden hin gerichteten Unterseite des Grundkörpers und mündet in einer bevorzugten Ausführungsform in diese Unterseite. Dadurch wird ein Verschleißschutz über eine gesamte Länge des Bodenbearbeitungszinkens erreicht. Ferner trägt das vollständig über die Länge des Bodenbearbeitungszinkens verlaufende Verstärkungselement durch das verschleißärmere Material zur Versteifung und Strukturverstärkung des Bodenbearbeitungszinkens bei. Alternativ oder zusätzlich kann auch vorgesehen sein, dass das Verstärkungselement eine zu der Unterseite des Grundkörpers hin zunehmende Dicke aufweist, um eine größere Materialstärke für die zu erwartenden höheren Beanspruchungen im tieferen und dichteren Boden bereitzustellen.

Vorteilhafterweise ist das Verstärkungselement an den Grundkörper angelötet. Zusätzlich zu der Verlötung kann eine Formschlussverriegelung über beispielsweise das Schwalbenschwanzprofil des Schlitzes und des Verriegelungselementes vorgesehen sein.

Gemäß einem zweiten Aspekt der Erfindung ist ein Bodenbearbeitungsgerät, insbesondere eine Kreiselegge oder ein Striegel, mit zumindest einem, eben beschriebenen Bearbeitungszinken ausgestattet. Mit einem derartigen Bodenbearbeitungsgerät können aufgrund des zumindest einen vorteilhaft ausgestalteten Bearbeitungszinkens höhere Standzeiten erreicht werden, wodurch eine wirtschaftlich vorteilhafte Bodenbearbeitung ermöglicht wird.

Nachfolgend werden Ausführungsbeispiele von Bodenbearbeitungszinken anhand der beigefügten Figuren näher erläutert. Es zeigen:
- Figur 1 -: einen nicht erfindungsgemässen Bodenbearbeitungszinken mit Nut in einer perspektivischen Ansicht;
- Figur 2 -: einen ausschnittsweise dargestellten nicht erfindungsgemäßen Bodenbearbeitungszinken mit Nut in einer perspektivischen Ansicht;
- Figuren 3 a bis c -: prinzipielle nicht erfindungsgemäßen Ausführungsformen von Bodenbearbeitungszinken und in die Nuten der Bodenbearbeitungszinken eingesetzten Verstärkungselementen in einer Querschnittansicht;
- Figuren 4 a bis c -: einen erfindungsgemäßen Bodenbearbeitungszinken in Form eines Striegelzinkens mit Schlitz in einer perspektivischen Ansicht, in einer Detailansicht sowie in einer Detail-Querschnittansicht;
- Figuren 5 a bis g -: prinzipielle erfindungsgemäßen Ausführungsformen von Bodenbearbeitungszinken mit Schlitz in einer Querschnittansicht.

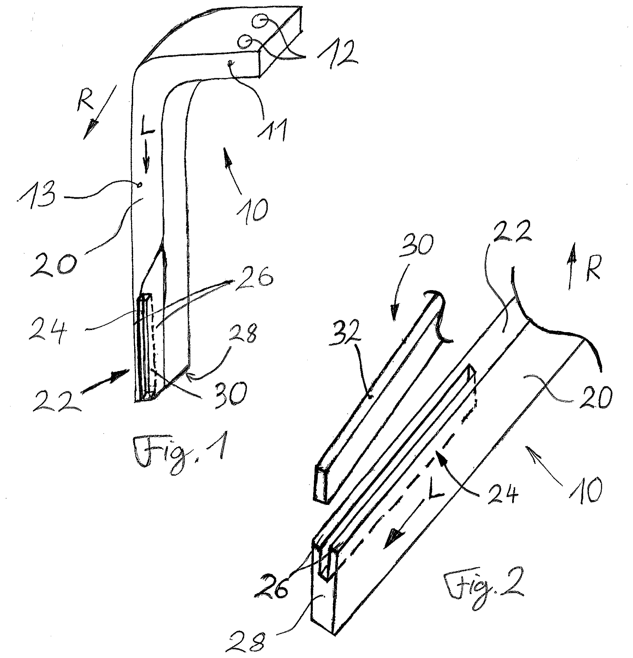

In Figur 1 ist ein Bodenbearbeitungszinken 10 in einer perspektivischen Ansicht dargestellt. Der Bodenbearbeitungszinken 10 weist einen Grundkörper 20 mit einem Anschlussschenkel 11 und einem langgestreckten Bearbeitungsschenkel 13 auf. Der Anschlussschenkel 11 weist zwei Anschlussbohrungen 12 auf, über die der Bodenbearbeitungszinken 10 an einem Bodenbearbeitungsgerät, wie beispielsweise eine Kreiselegge, befestigbar ist. Der Bearbeitungsschenkel 13 wird zur Bodenbearbeitung durch den Boden gezogen. Der Bodenbearbeitungszinken 10 weist an dem Bodenbearbeitungsschenkel 13 des Grundkörpers 20 eine Hauptbearbeitungsfläche 22 auf, die bei einer Bodenbearbeitung in Bearbeitungsrichtung R voran durch den Boden geführt wird. Entlang der Hauptbearbeitungsfläche 22 ist mittig eine in Längsrichtung L verlaufende Nut 24 eingearbeitet. In die Nut 24 ist ein Verstärkungselement 30 eingesetzt und mit dem Grundkörper 20 verlötet. Der Grundkörper 20 weist weiterhin zwei freiliegende Abschnitte 26 auf, wobei jeweils ein freiliegender Abschnitt 26 auf einer Seite neben dem Verstärkungselement 30 in Längsrichtung L verläuft und nicht von dem Verstärkungselement 30 abgedeckt ist. Die Nut 24 und das Verstärkungselement 30 verlaufen in Längsrichtung L bis zu einer Unterseite 28 des Grundkörpers 20 und münden in diese Unterseite 28.

In Figur 2 ist ein Ausschnitt eines Bodenbearbeitungszinkens 10 dargestellt, in dem der Grundkörper 20 mit der Hauptbearbeitungsfläche 22 sowie der in die Hauptbearbeitungsfläche 22 eingearbeiteten Nut 24 gezeigt ist. Der Bodenbearbeitungszinken 10 wird in Bearbeitungsrichtung R voran durch den Boden geführt. Das nur teilweise dargestellte Verstärkungselement 30 weist einen Kopfabschnitt 32 auf, der aus der Hauptbearbeitungsfläche 22 in Bearbeitungsrichtung R heraussteht, wenn das Verstärkungselement 30 in die Nut 24 eingesetzt ist. Die Hauptbearbeitungsfläche 22 weist zwei freiliegende Abschnitte 26 auf. Jeweils ein freiliegender Abschnitt 26 verläuft auf einer Seite neben dem Verstärkungselement 30 in Längsrichtung L. Die Nut 24 ist in Längsrichtung L ausgehend von der Unterseite 28 in den Grundkörper 20 eingearbeitet, so dass das Verstärkungselement 30 durch die Unterseite 28 in die Nut 24 eingeschoben werden kann. Das Verstärkungselement 30 und die Nut 24 können ein zueinander korrespondierendes Schwalbenschwanzprofil aufweisen, so dass ein Einsetzen des Verstärkungselementes 30 in die Nut 24 nur über die Unterseite 28 des Grundkörpers 20 möglich ist.

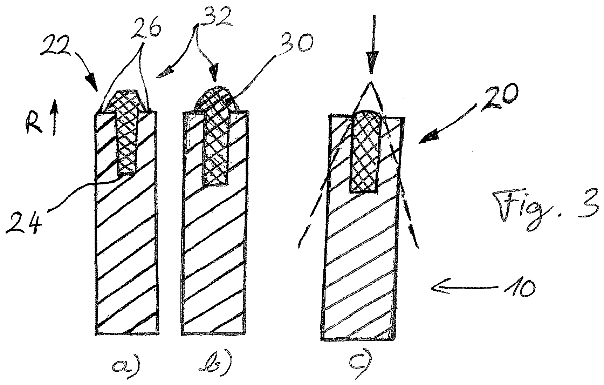

In Figur 3 sind in den Ausführungsbeispielen a bis c unterschiedliche Ausgestaltungen des in den Grundkörper 20 eingesetzten Verstärkungselements 30 im Querschnitt dargestellt. Das Verstärkungselement 30 ist in eine in den Grundkörper 20 eingearbeitete Nut 24 eingesetzt und dort vorzugsweise verlötet. Das Verstärkungselement 30 weist einen Kopfabschnitt 32 auf, der gemäß Figur 3a und 3b breiter als die Nut 24 ausgebildet ist und aus der Hauptbearbeitungsfläche 22 in Bearbeitungsrichtung R heraussteht. Gemäß Figur 3a ist der Kopfabschnitt 32 im Querschnitt trapezförmig ausgebildet, gemäß Figur 3b ist der Kopfabschnitt 32 des Verstärkungselements 30 gewölbt oder abgerundet. Der Kopfabschnitt 32 kann auch mehrere sich in Längsrichtung wiederholende Sockel oder Wölbungen aufweisen, die im Querschnitt beispielsweise trapezförmig oder gewölbt sind. Das Verstärkungselement 30 liegt einerseits mit einer der Hauptbearbeitungsfläche 22 zugewandten Fläche des Kopfabschnitts 32 und andererseits in einem Nutgrund an dem Grundkörper 20 an. Dadurch können angreifende Kräfte besser verteilt werden und lokale Beanspruchungsspitzen reduziert werden. In Figur 3c ist der selbstschärfende Effekt eines Bodenbearbeitungszinkens prinzipiell dargestellt. Mit dem entgegen der Bearbeitungsrichtung R weisenden Pfeil wird eine Belastungsrichtung auf den Grundkörper 20 bzw. das Verstärkungselement 30 angedeutet, wenn der Bodenbearbeitungszinken 10 durch den Boden geführt wird. Mit den keilförmig verlaufenden gestrichelten Linien wird ein Erdfluss entlang des Grundkörpers 20 prinzipiell dargestellt. Es ist zu erkennen, dass durch eine andauernde Bodenbearbeitung der Bodenbearbeitungszinken 10 zuerst an den spitzen, äußeren Übergängen zwischen der Hauptbearbeitungsfläche 22 und den Seitenflächen des Grundkörpers 20 verschleißt und dabei geschärft wird. Die freiliegenden Abschnitte 26, die zu Beginn im rechten Winkel zu den Nutseitenwänden stehen, werden durch den Verschleiß zunehmend angeschrägt, so dass sich der Winkel zu den Nutseitenwänden verkleinert. Das Verstärkungselement 30 verschleißt ebenso. Wenn das Verstärkungselement 30 formschlüssig in der Nut 24 gehalten wird, beispielsweise durch ein miteinander korrespondierendes Schwalbenschwanzprofil, ist es möglich, das Verstärkungselement 30 länger zu nutzen, da es erst ausgetauscht werden muss, wenn es in seiner Tiefe nahezu vollständig verschlissen ist.

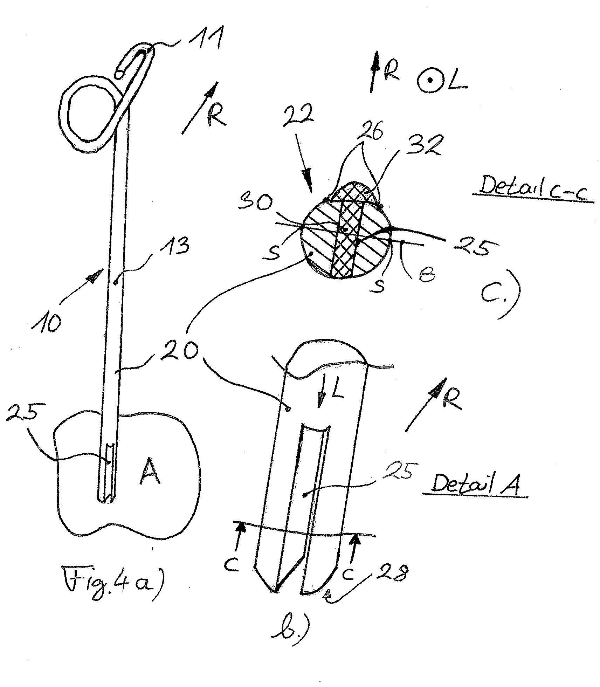

In Figur 4a ist ein Bodenbearbeitungszinken 10 in Form eines Striegelzinkens dargestellt, wie er beispielsweise bei einem Schwerstriegel, Hackstriegel oder Strohstriegel eingesetzt werden kann. Der Bodenbearbeitungszinken 10 weist einen Bearbeitungsschenkel 13 auf, der mit seinem unteren Ende über einen Boden geführt wird und dabei in den Boden eindringt. Ein Anschlussschenkel 11 ist zum Anschließen des Bodenbearbeitungszinkens 10 an ein Bodenbearbeitungsgerät vorgesehen. Der Bodenbearbeitungszinken 10 ist in Bearbeitungsrichtung R durch den Boden ziehbar. Der Bodenbearbeitungszinken 10 weist einen Schlitz 25 auf, der in einen unteren Abschnitt des Bearbeitungsschenkels 13 eingearbeitet ist und in Bearbeitungsrichtung R verläuft. In der Darstellung ist kein Verstärkungselement in den Schlitz 25 eingesetzt.

In Figur 4b ist der Bearbeitungsschenkel 13 in einer Detailansicht gemäß dem in Figur 4a gezeigten Bereich A vergrößert dargestellt. Der Schlitz 25 verläuft in Bearbeitungsrichtung R mittig durch den Grundkörper 20. Der dargestellte Aufbau des Grundkörpers 20 sowie der Verlauf des Schlitzes 25 sind identisch auf der der Bearbeitungsrichtung R zugewandten, nicht dargestellten, Seite vorgesehen.

In Figur 4c ist eine Detail-Querschnittansicht eines Bodenbearbeitungszinkens 10 entlang der in Figur 4b dargestellten Schnittlinie c-c dargestellt, wobei der Bodenbearbeitungszinken 10 zusätzlich ein Verstärkungselement 30 aufweist, das in den Schlitz 25 eingesetzt ist. Das Verstärkungselement 30 kann über die Unterseite 28 oder seitlich beispielsweise entgegen der Bearbeitungsrichtung R in den Schlitz 25 eingesetzt werden. Das Verstärkungselement 30 ist beispielsweise an dem den Grundkörper 20 berührenden Rand des Kopfabschnitts 32 entlang der Längsrichtung L mit dem Grundkörper 20 verlötet. Der Grundkörper 20 weist eine Hauptbearbeitungsfläche 22 auf, die zwei freiliegende Abschnitte 26 aufweist, die benachbart zu dem Verstärkungselement 30 in Längsrichtung L verlaufen. Die Hauptbearbeitungsfläche 22 ist die Fläche des Grundkörpers 20, die in Bearbeitungsrichtung R voran durch einen Boden geführt wird. Die Hauptbearbeitungsfläche 22 verläuft in der Darstellung entlang zweier Bögen, die jeweils beginnend von einer vorderen Schlitzkanten bis hin zu Schnittpunkten S einer Linie B mit einem Außenrand des Grundkörpers 20 verlaufen. Ein Kopfabschnitt 32 des Verstärkungselements 30 ist breiter als der Schlitz 25 ausgebildet und steht aus der Hauptbearbeitungsfläche 22 in Bearbeitungsrichtung R hinaus. Das Verstärkungselement 30 verläuft bis zu der Unterseite 28, so dass bei der Bodenbearbeitung ein entsprechender Verschleißschutz an der Unterseite 28 durch das Verstärkungselement 30 gewährleistet ist. Das Verstärkungselement 30 kann auch einen zweiten Kopfabschnitt aufweisen, der über die Unterseite 28 hinaussteht, um einen Verschleißschutz gegenüber den Beanspruchungen durch eine Kratzbewegung, wie sie insbesondere bei einem Striegel auftritt, entgegenzuwirken. Das Verstärkungselement 30 besteht gegenüber dem Grundkörper aus einem verschleißärmeren Material. Dadurch wird während der Bodenbearbeitung der Grundkörper 20 jeweils seitlich des Kopfabschnitts 32 zunehmend abgetragen und selbsttätig geschärft.

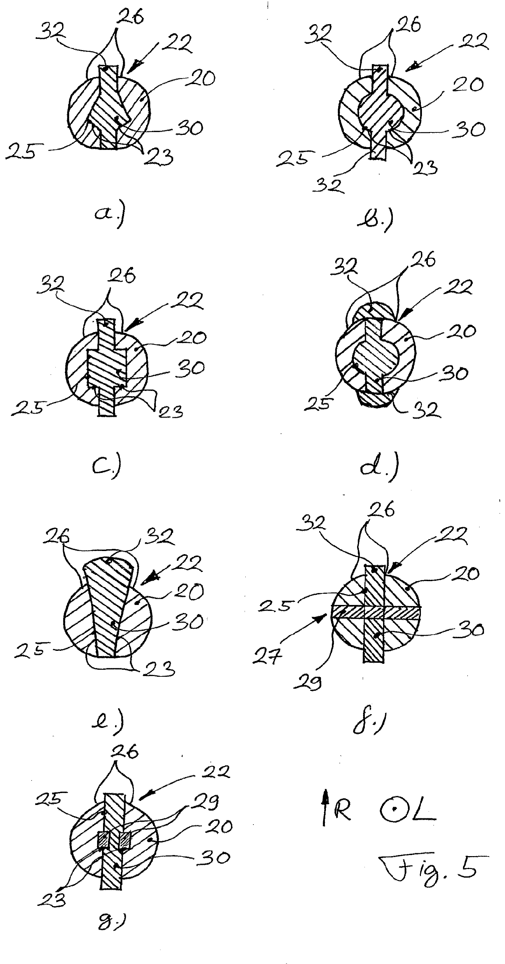

In Figur 5 sind weitere Ausführungsformen von Bodenbearbeitungszinken in Querschnittansicht dargestellt. Die unten dargestellte Bearbeitungsrichtung R und die Längsrichtung L gelten für alle Ausführungsbeispiele a bis g. In allen Ausführungsbeispielen ist der Grundkörper 20 eines Bodenbearbeitungszinkens dargestellt, in den ein Schlitz 25 eingearbeitet ist, in den ein zu dem Schlitz 25 korrespondierend ausgebildetes Verstärkungselement 30 eingesetzt ist. Das Verstärkungselement 30 kann über eine hier nicht dargestellte Unterseite des Grundkörpers 20 in den Schlitz 25 eingesetzt werden. Der Grundkörper 20 weist eine bereits beschriebene Hauptbearbeitungsfläche 22 auf. Das Verstärkungselement 30 weist einen Kopfabschnitt 32 auf, der über die Hauptbearbeitungsfläche 22 in Bearbeitungsrichtung R hinaussteht. Benachbart zu dem Kopfabschnitt 32 verlaufen jeweils zwei freiliegende Abschnitte 26 der Hauptbearbeitungsfläche 22 in Längsrichtung L.

In Figur 5a weist der Schlitz 25 in der Mitte des Grundkörpers 20 einen breiteren Querschnitt als an den in Bearbeitungsrichtung R oder entgegen der Bearbeitungsrichtung R weisenden Rändern. Der breitere Querschnitt ist in einen Verlauf des Schlitzes 25 integriert und weist im Querschnitt die Form eines an Kopf und Fuß abgeschnittenen Drachen auf. Das Verstärkungselement 30 ist zu dem dargestellten Verlauf des Schlitzes 25 korrespondierend ausgebildet, so dass ein Herausrutschen des Verstärkungselements 30 aus dem Schlitz 25 in Bearbeitungsrichtung R und entgegen der Bearbeitungsrichtung R gesperrt ist. Darüber hinaus können die bei der Bodenbearbeitung auf den Kopfabschnitt 32 entgegen der Bearbeitungsrichtung R wirkenden Beanspruchungen auch durch die Kontaktflächen des Verstärkungselements 30 mit dem Grundkörper 20 durch den aufgrund des breiteren Querschnitts des Schlitzes 25 entstandenen Sitz 23 aufgenommen werden. Die Beanspruchungen werden dadurch auf eine größere Fläche verteilt und der Kopfabschnitt 32 des Verstärkungselementes 30 dadurch entlastet.

In Figur 5b ist eine zur Figur 5a abweichende Ausführungsform dargestellt. Der verbreiterte Querschnitt im Schlitz 25 weist eine Kreisform auf, die in den Verlauf des Schlitzes 25 integriert ist. Diesbezüglich wurden der Grundkörper 20 und das Verstärkungselement 30 entsprechend angepasst. Das Verstärkungselement 30 weist einen zweiten Kopfabschnitt 32 auf, der auf einer dem ersten Kopfabschnitt 32 gegenüberliegenden Seite aus dem Grundkörper 20 herausragt, so dass eine Bodenbearbeitung in Bearbeitungsrichtung R und entgegen der Bearbeitungsrichtung R möglich ist oder der Bodenbearbeitungszinken 10 umgedreht werden kann.

In Figur 5c ist eine an die Figur 5b angelehnte Ausführungsform dargestellt, bei der der verbreitete Querschnitt des Schlitzes 25 im Querschnitt eine quadratische Form aufweist, die in den Verlauf des Schlitzes 25 integriert ist. Auch mit diesem Bodenbearbeitungszinken 10 ist ein Wenden oder eine Bodenbearbeitung in und entgegen der Bearbeitungsrichtung R möglich.

In Figur 5d ist eine an Figur 5b angelehnte Ausführungsform dargestellt, bei der das Verstärkungselement 30 zwei Kopfabschnitte 32 aufweist, die einen breiteren Querschnitt als der Schlitz 25 aufweisen. Dadurch können die auftretenden Beanspruchungen bei der Bodenbearbeitung auf eine vergrößerte Fläche übertragen werden. Im Vergleich zu dem in Figur 5b gezeigten Ausführungsbeispiel kommt im vorliegenden Fall jeweils die Fläche des Kopfabschnitts 32 hinzu, die der Hauptbearbeitungsfläche 22 zugewandt ist. Dadurch können die am Kopfabschnitt 32 angreifenden Beanspruchungen reduziert und der Kopfabschnitt 32 entlastet werden. Das Verstärkungselement 30 kann an den seitlichen Rändern des Kopfabschnitts 32 in Längsrichtung L mit dem Grundkörper 20 verlötet sein. Die Lötstellen können dadurch von der Schlitzkante weg zu einem flächigen Abschnitt der Hauptbearbeitungsfläche 22 versetzt werden, wodurch das Risiko für lokale Materialversprödungen verringert werden kann.

In Figur 5e weist der in den Grundkörper 20 eingearbeitete Schlitz 25 einen in Bearbeitungsrichtung R breiter werdenden Querschnitt auf. Dadurch entsteht ein Sitz 23, durch den das in den Schlitz 25 eingesetzte Verstärkungselement 30 gegen ein Herausrutschen entgegen der Bearbeitungsrichtung R durch Formschluss gesperrt wird.

Durch den Sitz 23 ist das Verstärkungselement 30 sicher in dem Grundkörper 20 eingebettet. Weiterhin können die am Kopfabschnitt 32 angreifenden Beanspruchungen auf die zusätzlichen Flächen des Sitzes 23 überbetragen und der Kopfabschnitt 32 entlastet werden.

Bei den bisher beschriebenen Ausführungsbeispielen 5-a bis 5-e kann das Verstärkungselement 30 mit dem Grundkörper verlötet werden. In den Ausführungsbeispielen 5-a bis 5-d kann das Verstärkungselement 30 auch durch beispielsweise eine mit der nicht dargestellten Unterseite des Grundkörpers 20 verschraubbare Platte an einem Herausrutschen in Längsrichtung aus dem Grundkörper heraus gehindert werden. In diesen Fällen muss ein Verlöten nicht erfolgen.

In Figur 5f und Figur 5g weisen die Schlitze 25 eine geradlinige Form auf, die für eine formschlüssige Verbindung des Verstärkungselements 30 mit dem Grundkörper 20 ein weiteres Element benötigt. Um ein Herausrutschen des Verstärkungselements 30 in Längsrichtung L und entgegen der Bearbeitungsrichtung R zu verhindern, ist in Figur 5f ein Aufnahmedurchgang 27 senkrecht zu der Bearbeitungsrichtung R in den Grundkörper 20 eingearbeitet. Bei dem Aufnahmedurchgang 27 kann es sich beispielsweise um eine Bohrung handeln. Das Verstärkungselement 30 weist einen zu dem Aufnahmedurchgang 27 korrespondierenden Durchgang auf, der bei einem eingesetzten Verstärkungselement 30 mit dem Aufnahmedurchgang 27 fluchtet. In den Aufnahmedurchgang 27 ist ein Verriegelungselement 29 eingesetzt. Das Verriegelungselement 29 kann beispielsweise ein Stift sein, der klemmend gehalten ist oder über weitere nicht dargestellte Haltemittel in dem Aufnahmedurchgang 27 gehalten wird.

In Figur 5g ist dargestellt, dass in dem Grundkörper 20 und in das Verstärkungselement 30 einander gegenüberliegende Ausnehmungen eingearbeitet sind, die einen Sitz 23 für zwei Verriegelungselemente 29 bilden. Die Verriegelungselemente 29 sind im vorliegenden Fall Federelemente, die beim Einschieben des Verstärkungselement 30 in den Schlitz 25 entgegen der Längsrichtung L in den Grundkörper 20 zunächst zusammengedrückt werden und dann in die Ausnehmungen des Verstärkungselements 30 ausfedern und das Verstärkungselement dadurch formschlüssig mit dem Grundkörper 20 verbinden. Das Verstärkungselement 30 ist dadurch sicher in den Grundkörper 20 eingebettet, so dass ein Herausrutschen in Bearbeitungsrichtung R, entgegen der Bearbeitungsrichtung R sowie in Längsrichtung L verhindert wird. Auch mit den in Figur 5f und 5g gezeigten Ausführungsbeispielen ist eine Bodenbearbeitung in und entgegen der Bearbeitungsrichtung R möglich.

### Bezugszeichenliste

- 10: Bodenbearbeitungszinken
- 11: Anschlussschenkel
- 12: Anschlussbohrungen
- 13: Bearbeitungsschenkel

- 20: Grundkörper
- 22: Hauptbearbeitungsfläche
- 23: Sitz
- 24: Nut
- 25: Schlitz
- 26: freiliegender Abschnitt
- 27: Aufnahmedurchgang
- 28: Unterseite
- 29: Verriegelungselement
- 30: Verstärkungselement
- 32: Kopfabschnitt

- A: Bereich
- c-c: Schnittlinie
- L: Längsrichtung
- R: Bearbeitungsrichtung
- S: Schnittpunkt

## Patentansprüche

1. Bodenbearbeitungszinken (10) für ein Bodenbearbeitungsgerät, insbesondere Kreiselegge oder Striegel, wobei der Bodenbearbeitungszinken (10)
einen Grundkörper (20) mit einer Hauptbearbeitungsfläche (22), die während einer Bodenbearbeitung in einer Bearbeitungsrichtung (R) voran durch einen Boden führbar ist, und
ein längliches Verstärkungselement (30), das in einer Längsrichtung (L) entlang der Hauptbearbeitungsfläche (22) angeordnet ist und aus einem verschleißärmeren Material als der Grundkörper (20) besteht, aufweist,
wobei das Verstärkungselement (30) zumindest teilweise in den Grundkörper (20) eingebettet ist, und
die Hauptbearbeitungsfläche (22) wenigstens einen freiliegenden Abschnitt (26) aufweist, der benachbart zu dem Verstärkungselement (30) in Längsrichtung (L) verläuft,
**dadurch gekennzeichnet, dass**
der Grundkörper (20) einen entlang der Hauptbearbeitungsfläche (22) in Längsrichtung (L) orientierten Schlitz (25) zum Aufnehmen des Verstärkungselements aufweist.

2. Bodenbearbeitungszinken (10) nach Anspruch 1, **dadurch gekennzeichnet, dass** die Hauptbearbeitungsfläche (22) zwei freiliegende Abschnitte (26) aufweist, wobei jeweils ein freiliegender Abschnitt (26) auf einer Seite neben dem Verstärkungselement (30) verläuft.

3. Bodenbearbeitungszinken (10) nach Anspruch 1 oder 2, **dadurch gekennzeichnet, dass** der Schlitz (25) und das Verstärkungselement (30) so miteinander korrespondierend ausgebildet sind, dass ein Ausrücken des Verstärkungselements (30) aus dem Schlitz (25) in Bearbeitungsrichtung (R) durch Formschluss gesperrt wird.

4. Bodenbearbeitungszinken (10) nach einem der voranstehenden Ansprüche, **gekennzeichnet durch** zumindest ein Verriegelungselement zum formschlüssigen Verriegeln des Verstärkungselements (30) in dem Schlitz (25).

5. Bodenbearbeitungszinken (10) nach einem der voranstehenden Ansprüche, **dadurch gekennzeichnet, dass** ein Kopfabschnitt (32) des Verstärkungselements (30) breiter als der Schlitz (25) ausgebildet ist und/oder aus der Hauptbearbeitungsfläche (22) in Bearbeitungsrichtung (R) heraussteht.

6. Bodenbearbeitungszinken (10) nach einem der voranstehenden Ansprüche, **dadurch gekennzeichnet, dass** das Verstärkungselement (30) ein Hartmetall aufweist, insbesondere aus Hartmetall besteht.

7. Bodenbearbeitungszinken (10) nach einem der voranstehenden Ansprüche, **dadurch gekennzeichnet, dass** das Verstärkungselement (30) bis zu einer zu dem Boden hin gerichteten Unterseite (28) des Grundkörpers (20) verläuft, insbesondere in die Unterseite (28) mündet.

8. Bodenbearbeitungszinken (10) nach einem der voranstehenden Ansprüche, **dadurch gekennzeichnet, dass** das Verstärkungselement (30) an den Grundkörper (20) angelötet ist.

9. Bodenbearbeitungsgerät, insbesondere Kreiselegge oder Striegel, mit zumindest einem Bearbeitungszinken (10) nach einem der voranstehenden Ansprüche.

## Claims

1. Tillage tine (10) for a soil working implement, in particular a rotary harrow or harrow, wherein the tillage tine (10) has
a base body (20) having a main working surface (22) which can be passed through a soil in a working direction (R) forwardly during a tillage, and
an elongated reinforcing member (30) disposed in a longitudinal direction (L) along the main working surface (22) and made of a material less prone to wear than the base body (20),
wherein the reinforcing element (30) is at least partially embedded in the base body (20), and
said main working surface (22) has at least one exposed portion (26) extending adjacent said reinforcing member (30) in longitudinal direction (L),
**characterized in that** the base body (20) has a slot (25) oriented along the main working surface (22) in the longitudinal direction (L) for receiving the reinforcing element.

2. Tillage tine (10) according to claim 1, **characterized in that** the main working surface (22) has two exposed portions (26), one exposed portion (26) extending on each side adjacent to the reinforcing element (30).

3. Tillage tine (10) according to claim 1 or 2, **characterized in that** the slot (25) and the reinforcing element (30) are formed corresponding to each other in such a way that disengagement of the reinforcing element (30) from the slot (25) in the working direction (R) is blocked by positive locking.

4. Tillage tine (10) according to one of the above claims, **characterized by** at least one locking element for positively locking the reinforcing element (30) in the slot (25).

5. Tillage tine (10) according to one of the above claims, **characterized in that** a head portion (32) of the reinforcing element (30) is formed wider than the slot (25) and/or protrudes from the main working surface (22) in the working direction (R).

6. Tillage tine (10) according to one of the above claims, **characterized in that** the reinforcing element (30) comprises a hard metal, in particular consists of hard metal.

7. Tillage tine (10) according to one of the above claims, **characterized in that** the reinforcing element (30) extends as far as an underside (28) of the base body (20) directed towards the ground, in particular opens into the underside (28).

8. Tillage tine (10) according to one of the above claims, **characterized in that** the reinforcing element (30) is soldered to the base body (20).

9. Tillage implement, in particular rotary harrow or harrow, with at least one working tine (10) according to one of the above claims.

## Revendications

1. Dent de travail du sol (10) pour un appareil de travail du sol, en particulier une herse rotative ou une herse étrille, la dent de travail du sol (10) comportant
un corps de base (20) ayant une surface de travail principale (22) qui peut être guidée à travers un sol dans une direction de travail (R) vers l'avant pendant le travail du sol, et
un élément de renforcement allongé (30) disposé dans une direction longitudinale (L) le long de la surface de travail principale (22) et constitué d'un matériau moins sujet à l'usure que le corps de base (20),
l'élément de renforcement (30) étant au moins partiellement noyé dans le corps de base (20), et
ladite surface de travail principale (22) comportant au moins une partie dégagée (26) s'étendant en direction longitudinale (L) au voisinage de l'élément de renforcement (30),
**caractérisée en ce que**
le corps de base (20) présente une fente (25) orientée le long de la surface de travail principale (22) en direction longitudinale (L) et destinée à recevoir l'élément de renforcement.

2. Dent de travail du sol (10) selon la revendication 1,
**caractérisée en ce que** la surface de travail principale (22) comprend deux parties dégagées (26), une partie dégagée (26) s'étendant respectivement sur un côté à côté de l'élément de renforcement (30).

3. Dent de travail du sol (10) selon la revendication 1 ou 2,
**caractérisée en ce que** la fente (25) et l'élément de renforcement (30) sont réalisés pour se correspondre de telle sorte que le désengagement de l'élément de renforcement (30) hors de la fente (25) dans la direction de travail (R) est bloqué par coopération de forme.

4. Dent de travail du sol (10) selon l'une des revendications précédentes,
**caractérisée par** au moins un élément de verrouillage pour le verrouillage par coopération de forme de l'élément de renforcement (30) dans la fente (25).

5. Dent de travail du sol (10) selon l'une des revendications précédentes,
**caractérisée en ce qu'**une portion de tête (32) de l'élément de renforcement (30) est réalisée plus large que la fente (25) et/ou fait saillie hors de la surface de travail principale (22) dans la direction de travail (R).

6. Dent de travail du sol (10) selon l'une des revendications précédentes,
**caractérisée en ce que** l'élément de renforcement (30) présente un métal dur, en particulier est constitué de métal dur.

7. Dent de travail du sol (10) selon l'une des revendications précédentes,
**caractérisée en ce que** l'élément de renforcement (30) s'étend jusqu'à une face inférieure (28) du corps de base (20) dirigée vers le sol, en particulier débouche dans la face inférieure (28).

8. Dent de travail du sol (10) selon l'une des revendications précédentes,
**caractérisée en ce que** l'élément de renforcement (30) est soudé au corps de base (20).

9. Appareil de travail du sol, en particulier herse rotative ou herse étrille, comportant au moins une dent de travail (10) selon l'une des revendications précédentes.
